# EUROPEAN PATENT SPECIFICATION

(11) **EP 3 621 352 B1**
(45) Date of publication and mention of the grant of the patent: **29.12.2021**
(21) Application number: 18820506.6
(22) Date of filing: 20.06.2018
(51) Int. Cl.: H04W 36/00, H04W 36/14, H04W 76/30

(54) **PDU SESSION PROCESSING METHOD AND DEVICE**
VERFAHREN UND VORRICHTUNG ZUR PDU-SITZUNGSVERARBEITUNG
PROCÉDÉ ET DISPOSITIF DE TRAITEMENT DE SESSION D'UNITÉ PDU

(30) Priority: 20.06.2017 CN 201710469763; 20.11.2017 CN 201711159218
(43) Date of publication of application: 11.03.2020
(73) Proprietor: Huawei Technologies Co., Ltd., Longgang District Shenzhen, Guangdong 518129 (CN)
(72) Inventor: LI, Huan, Shenzhen Guangdong 518129 (CN); LU, Wei, Shenzhen Guangdong 518129 (CN)
(74) Representative: Pfenning, Meinig & Partner mbB
(86) International application number: PCT/CN2018/091906
(87) International publication number: WO 2018/233615

(56) References cited:
- EP-A1- 3 477 993
- CN-A- 101 909 343
- CN-A- 105 722 168
- US-A1- 2008 002 642
- US-A1- 2011 134 880
- LG ELECTRONICS ET AL: "TS 23.502: Applicability of handover between 3GPP and N3GPP", 3GPP DRAFT; S2-173389_TS 23 502 APPLICABILITY OF HANDOVER BETWEEN 3GPP AND N3GPP, 3RD GENERATION PARTNERSHIP PROJECT (3GPP), MOBILE COMPETENCE CENTRE ; 650, ROUTE DES LUCIOLES ; F-06921 SOPHIA-ANTIPOL , vol. SA WG2, no. Hangzhou, China; 20170515 - 20170519 14 May 2017 (2017-05-14), XP051281881, Retrieved from the Internet: URL:http://www.3gpp.org/ftp/Meetings_3GPP_ SYNC/SA2/Docs/ [retrieved on 2017-05-14]
- HUAWEI HISILICON: "Comparison of the options for session ID allocation and routing of subsequent SM signalling", 3GPP DRAFT; S2-167000, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Reno, Nevada, USA; 20161114 - 20161118 21 November 2016 (2016-11-21), XP051199958, Retrieved from the Internet: URL:http://www.3gpp.org/ftp/tsg_sa/WG2_Arc h/TSGS2_118_Reno/Docs/ [retrieved on 2016-11-21]
- LG ELECTRONICS: "TS 23.502: Clarification on handover between 3GPP and N3GPP", 3GPP DRAFT; S2-173390_TS 23 502 CLARIFICATION ON HANDOVER BETWEEN 3GPP AND N3GPP, 3RD GENERATION PARTNERSHIP PROJECT (3GPP), MOBILE COMPETENCE CENTRE ; 650, ROUTE DES LUCIOLES ; F-06921 SOPHIA-ANTIPOL , vol. SA WG2, no. Hangzhou, China; 20170515 - 20170519 14 May 2017 (2017-05-14), XP051281882, Retrieved from the Internet: URL:http://www.3gpp.org/ftp/Meetings_3GPP_ SYNC/SA2/Docs/ [retrieved on 2017-05-14]
- HUAWEI ET AL: "Roaming mode consideration for HO procedure between 3GPP access and non-3GPP access", 3GPP DRAFT; S2-179551 WAS S2-179263 OF S2-179212 WAS S2-178827 ROAMING MODE CONSIDERATION FOR HO PROCEDURE BETWEEN 3GPP ACCESS AND NON-3GPP ACCESS, 3RD GENERATION PARTNERSHIP PROJECT (3GPP), MOBILE CO , vol. SA WG2, no. Reno, US; 20171127 - 20171201 4 December 2017 (2017-12-04), XP051367145, Retrieved from the Internet: URL:http://www.3gpp.org/ftp/tsg%5Fsa/WG2%5 FArch/TSGS2%5F124%5FReno/Docs/ [retrieved on 2017-12-04]

## Description

### TECHNICAL FIELD

This application relates to the field of mobile communications technologies, and in particular, to a PDU session processing method, a computer readable storage medium, an apparatus and system.

### BACKGROUND

A fifth generation (5th generation, 5G) core network allows a terminal to access the 5G core network from a 3GPP (3rd generation partnership project, 3GPP) access network, and also allows the terminal to access the 5G core network from a non-3GPP (non-3GPP) access network by using an access gateway (for example, a non-3GPP interworking function (non-3GPP interworking function, N3IWF)). When accessing the 5G core network from both the 3GPP access network and the non-3GPP access network, the terminal usually selects an N3IWF within a public land mobile network (public land mobile network, PLMN) in which the 3GPP access network is located. In this way, the 5G core network needs only one access and mobility management function (access and mobility management function, AMF) network element to perform access control management on the terminal.

However, in some cases, for example, in a roaming scenario, when the terminal accesses the 5G core network from the 3GPP access network, the terminal may select an N3IWF in a PLMN (such as another visited public land mobile network (visited public land mobile network, vPLMN) or another home public land mobile network (home public land mobile network, hPLMN)) that is different from a PLMN in which the 3GPP access network is located. In this case, the 5G core network needs two AMF network elements to perform access control management on the terminal. Currently, there is no solution related to whether a terminal can perform PDU session handover between a roaming scenario and a non-roaming scenario or between roaming scenarios and how to perform the handover.

3GPP draft document S2-173388 titled "TS 23.502: Applicability of handover between 3GPP and N3GPP" discusses storing local break out (LBO)/home routed(HR/non-roaming information in UDM when a PDU session is established. Based on this data a AMF decides whether a PDU session can be handed over or not.

3GPP draft document S2-167000 titled "Comparison of the options for session ID allocation and routing of subsequent SM signalling" discusses alternatives for allocating a PDU session identifier.

### SUMMARY

This application provide a PDU session processing method, a computer readable storage medium, an apparatus and system, to provide a PDU session handover solution. The invention is defined by the appended claims.

Examples and technical descriptions of apparatuses and/or methods in the following summary which are not covered by the claims are presented not as embodiments of the invention but as examples useful for understanding the invention.

To achieve the foregoing objective, the following technical solutions are provided in this application.

According to a first aspect, a PDU session processing method is provided. The method includes: receiving, by a first core-network network element, a first message from a terminal through a first network, where the first message includes handover indication information, to instruct the first core-network network element to hand over a PDU session from a second network to the first network; and then processing, by the first core-network network element, the handover of the PDU session based on roaming status information of the PDU session. When the terminal is in different networks, the first core-network network element may process the handover of the PDU session based on the roaming status information of the PDU session, so that a PDU session handover solution is provided. In addition, because the handover of the PDU session is processed based on the roaming status information of the PDU session, a case in which a handover request is accepted first and then the handover fails is avoided. Further, compared with a method in which no handover request can be initiated, in some allowable scenarios, service continuity can be ensured by using the method in this application.

In a possible implementation, if the roaming status information of the PDU session is home routed or non-roaming, the first core-network network element establishes the PDU session in the first network.

In a possible implementation, if the roaming status information of the PDU session is local breakout, the first core-network network element rejects establishment of the PDU session in the first network.

In a possible implementation, if the roaming status information of the PDU session is local breakout, and the first core-network network element and a session management network element corresponding to the PDU session do not belong to a same PLMN, the first core-network network element rejects establishment of the PDU session in the first network.

In a possible implementation, the first core-network network element processes the handover of the PDU session based on the roaming status information of the PDU session and IP continuity requirement information of the terminal corresponding to the PDU session before and after the handover.

In a possible implementation, if the roaming status information of the PDU session is local breakout, and IP continuity of the terminal needs to be ensured, the first core-network network element rejects establishment of the PDU session in the first network.

In a possible implementation, if the roaming status information of the PDU session is local breakout, and IP continuity of the terminal does not need to be ensured, the first core-network network element establishes the PDU session in the first network.

Several manners of processing the handover of the PDU session are provided above. During specific implementation, one or more of the manners may be selected depending on an actual situation to process the handover of the PDU session.

In a possible implementation, the first core-network network element determines the roaming status information of the PDU session based on identifier information of the session management network element corresponding to the PDU session.

In a possible implementation, the first core-network network element obtains the roaming status information of the PDU session from a data management network element.

In a possible implementation, the first message further includes the roaming status information, and the first core-network network element obtains the roaming status information of the PDU session from the first message.

Several manners of obtaining the roaming status information of the PDU session are provided above. During specific implementation, one or more of the obtaining manners may be selected depending on an actual situation.

In a possible implementation, the first core-network network element obtains the IP continuity requirement information of the terminal corresponding to the PDU session from the data management network element.

In a possible implementation, the first message further includes the IP continuity requirement information of the terminal corresponding to the PDU session, and the first core-network network element obtains the IP continuity requirement information of the terminal corresponding to the PDU session from the first message.

Several manners of obtaining the IP continuity requirement information of the terminal corresponding to the PDU session are provided above. During specific implementation, one or more of the obtaining manners may be selected depending on an actual situation.

According to a second aspect, this application provides a PDU session processing apparatus. The apparatus has a function of implementing the first core-network network element in the foregoing method. The function may be implemented by using hardware, or may be implemented by hardware executing corresponding software. The hardware or software includes one or more modules corresponding to the foregoing function.

In a possible implementation, the apparatus includes a processor, a transceiver, and a memory. The memory is configured to store a computer executable instruction. The transceiver is configured to implement communication between the apparatus and another communications entity. The processor is connected to the memory by using a bus, and when the apparatus runs, the processor executes the computer executable instruction stored in the memory, enabling the PDU session processing apparatus to perform the method according to the first aspect.

According to a third aspect, this application provides a PDU session processing method. The method includes: receiving, by a first core-network network element, a first message from a terminal through a first network, where the first message includes handover indication information, and the handover indication information is used to instruct the first core-network network element to hand over a packet data unit PDU session from a second network to the first network; and if the PDU session before the handover is disconnected after establishment of a PDU session obtained after the handover is completed, and IP continuity of the terminal needs to be ensured, rejecting, by the first core-network network element, the handover of the PDU session.

According to a fourth aspect, this application provides a PDU session processing apparatus. The apparatus has a function of implementing the first core-network network element in the foregoing method. The function may be implemented by using hardware, or may be implemented by hardware executing corresponding software. The hardware or software includes one or more modules corresponding to the foregoing function.

In a possible implementation, the apparatus includes a processor, a transceiver, and a memory. The memory is configured to store a computer executable instruction. The transceiver is configured to implement communication between the apparatus and another communications entity. The processor is connected to the memory by using a bus, and when the apparatus runs, the processor executes the computer executable instruction stored in the memory, enabling the PDU session processing apparatus to perform the method according to the third aspect.

According to a fifth aspect, this application provides a PDU session processing method. The method may be performed by a session management network element, and the session management network element may be, for example, an SMF network element. The method includes: sending, by the session management network element, at least one of roaming status information of a PDU session, IP continuity requirement information of a terminal corresponding to the PDU session, and identifier information of the session management network element to a data management network element.

Optionally, the data management network element may be a UDM network element.

According to a sixth aspect, this application provides a PDU session processing apparatus. The apparatus has a function of implementing the session management network element in the foregoing method. The function may be implemented by using hardware, or may be implemented by hardware executing corresponding software. The hardware or software includes one or more modules corresponding to the foregoing function.

In a possible implementation, the apparatus includes a processor, a transceiver, and a memory. The memory is configured to store a computer executable instruction. The transceiver is configured to implement communication between the apparatus and another communications entity. The processor is connected to the memory by using a bus, and when the apparatus runs, the processor executes the computer executable instruction stored in the memory, enabling the PDU session processing apparatus to perform the method according to the fifth aspect.

According to a seventh aspect, this application provides a PDU session processing method. The method may be performed by a terminal, and the method includes: sending, by the terminal, a first message to a first core-network network element, where the first message includes handover indication information, and the handover indication information is used to instruct the first core-network network element to hand over a PDU session from a second network to a first network; and then receiving, by the terminal, a second message from the first core-network network element, where the second message is used to indicate a PDU session processing result.

In a possible implementation, the second message is used to instruct to establish the PDU session.

In a possible implementation, the second message is used to instruct to reject the handover of the PDU session.

In a possible implementation, the first message includes roaming status information.

In a possible implementation, the first message includes IP continuity requirement information of the terminal corresponding to the PDU session.

In a possible implementation, the first message includes an identifier of the PDU session.

In a possible implementation, the terminal determines, based on the IP continuity requirement information, that a handover request needs to be initiated.

In a possible implementation, the terminal determines that an SSC mode of the PDU session is an SSC mode 1 or an SSC mode 3.

According to an eighth aspect, this application provides a PDU session processing apparatus. The apparatus has a function of implementing the terminal in the foregoing method. The function may be implemented by using hardware, or may be implemented by hardware executing corresponding software. The hardware or software includes one or more modules corresponding to the foregoing function.

In a possible implementation, the apparatus includes a processor, a transceiver, and a memory. The memory is configured to store a computer executable instruction. The transceiver is configured to implement communication between the apparatus and another communications entity. The processor is connected to the memory by using a bus, and when the apparatus runs, the processor executes the computer executable instruction stored in the memory, enabling the PDU session processing apparatus to perform the method according to the seventh aspect.

According to a ninth aspect, this application provides a PDU session processing method. The method includes: receiving, by a first core-network network element, a first message from a terminal through a first network, where the first message includes handover indication information, and the handover indication information is used to instruct the first core-network network element to hand over a PDU session from a second network to the first network; and processing, by the first core-network network element, the handover of the PDU session based on identifier information of a session management network element corresponding to the PDU session.

In a possible implementation, the processing, by the first core-network network element, the handover of the PDU session based on identifier information of a session management network element corresponding to the PDU session includes: determining, by the first core-network network element based on the identifier information of the session management network element, that the first core-network network element can be connected to the session management network element; and establishing, by the first core-network network element, the PDU session in the first network.

In a possible implementation, the first core-network network element determines, based on the identifier information of the session management network element, that the first core-network network element and the session management network element do not belong to a same PLMN, and a PLMN in which the session management network element is located is a visited PLMN; and the first core-network network element rejects establishment of the PDU session in the first network.

In a possible implementation, the processing, by the first core-network network element, the handover of the PDU session based on identifier information of a session management network element corresponding to the PDU session includes: determining, by the first core-network network element based on the identifier information of the session management network element, that the first core-network network element cannot be connected to the session management network element; and rejecting, by the first core-network network element, establishment of the PDU session in the first network.

In a possible implementation, the processing, by the first core-network network element, the handover of the PDU session based on identifier information of a session management network element corresponding to the PDU session includes: determining, by the first core-network network element based on the identifier information of the session management network element, that the first core-network network element and the session management network element belong to a same public land mobile network PLMN; and establishing, by the first core-network network element, the PDU session in the first network.

In a possible implementation, the processing, by the first core-network network element, the handover of the PDU session based on identifier information of a session management network element corresponding to the PDU session includes: determining, by the first core-network network element based on the identifier information of the session management network element, that the first core-network network element and the session management network element do not belong to a same PLMN; and rejecting, by the first core-network network element, establishment of the PDU session in the first network.

In a possible implementation, the identifier information of the session management network element includes identifier information of the PLMN in which the session management network element is located.

In a possible implementation, the first core-network network element obtains the identifier information of the session management network element from a data management network element.

In a possible implementation, the processing, by the first core-network network element, the handover of the PDU session based on identifier information of a session management network element corresponding to the PDU session includes: processing, by the first core-network network element, the handover of the PDU session based on the identifier information of the session management network element and Internet Protocol IP continuity requirement information of the terminal corresponding to the PDU session before and after the handover.

According to a tenth aspect, this application provides a PDU session processing apparatus. The apparatus includes a transceiver unit and a processing unit. The transceiver unit is configured to receive a first message from a terminal through a first network, where the first message includes handover indication information, and the handover indication information is used to instruct the processing unit to hand over a PDU session from a second network to the first network. The processing unit is configured to process the handover of the PDU session based on identifier information of a session management network element corresponding to the PDU session.

According to an eleventh aspect, this application provides a PDU session processing apparatus. The apparatus includes a memory, a processor, and a communications interface. The memory is configured to store a computer instruction. The processor is configured to perform the following operations based on the computer instruction stored in the memory: receiving, through the communications interface, a first message from a terminal through a first network, where the first message includes handover indication information, and the handover indication information is used to instruct the processor to hand over a PDU session from a second network to the first network; and processing the handover of the PDU session based on identifier information of a session management network element corresponding to the PDU session.

According to a twelfth aspect, this application provides a computer storage medium, configured to store a computer software instruction used by the foregoing first core-network network element. The computer software instruction includes a program designed for the first core-network network element to perform the foregoing aspects.

According to a thirteenth aspect, this application provides a computer storage medium, configured to store a computer software instruction used by the foregoing session management network element. The computer software instruction includes a program designed for the session management network element to perform the foregoing aspects.

According to a fourteenth aspect, this application provides a computer storage medium, configured to store a computer software instruction used by the foregoing terminal. The computer software instruction includes a program designed for the terminal to perform the foregoing aspects.

According to a fifteenth aspect, this application provides a computer program product. The computer program product includes a computer software instruction, and the computer software instruction may be loaded by using a processor to implement the procedure in the method according to the first aspect.

According to a sixteenth aspect, this application provides a computer program product. The computer program product includes a computer software instruction, and the computer software instruction may be loaded by using a processor to implement the procedure in the method according to the third aspect.

According to a seventeenth aspect, this application provides a computer program product. The computer program product includes a computer software instruction, and the computer software instruction may be loaded by using a processor to implement the procedure in the method according to the fifth aspect.

According to an eighteenth aspect, this application provides a computer program product. The computer program product includes a computer software instruction, and the computer software instruction may be loaded by using a processor to implement the procedure in the method according to the seventh aspect.

According to a nineteenth aspect, this application provides a chip. The chip includes a processor and a transceiver component, and optionally further includes a memory, to perform the PDU session processing methods according to the foregoing aspects.

In addition, for technical effects of any implementation in the second aspect to the nineteenth aspect, refer to technical effects of different implementations in the first aspect. Details are not described herein again.

It is clearer and easier to understand these aspects or other aspects of this application in descriptions of the following embodiments.

### BRIEF DESCRIPTION OF DRAWINGS

FIG. 1 is a schematic diagram of a network architecture to which an embodiment of this application is applied;
FIG. 2 is a schematic diagram of another network architecture to which an embodiment of this application is applied;
FIG. 3 is a schematic diagram of still another network architecture to which an embodiment of this application is applied;
FIG. 4 is a schematic diagram of a PDU session processing method according to an embodiment of this application;
FIG. 5 is a schematic diagram of another PDU session processing method not covered by the claimed invention;
FIG. 6 is a schematic diagram of another PDU session processing method not covered by the claimed invention;
FIG. 7 is a PDU session processing apparatus according to an embodiment of this application;
FIG. 8 is another PDU session processing apparatus not covered by the claimed invention; and
FIG. 9 is still another PDU session processing apparatus not covered by the claimed invention.

### DESCRIPTION OF EMBODIMENTS

The following describes the technical solutions in the embodiments of this application with reference to the accompanying drawings in the embodiments of this application. A specific operation method in a method embodiment would also be applied to an apparatus embodiment and a system embodiment. In the descriptions of this application, unless otherwise stated, "a plurality of" indicates at least two.

A terminal is a device having a wireless receiving and sending function. The terminal may be deployed on land, including an indoor or outdoor device, a handheld device, or an in-vehicle device; or may be deployed on water (for example, on a steamer); or may be deployed in air (for example, on an air plane, a balloon, or a satellite). The terminal may be a mobile phone (mobile phone), a tablet computer (pad), a computer having a wireless receiving and sending function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. In the embodiments of this application, an example in which the terminal is UE is used for description.

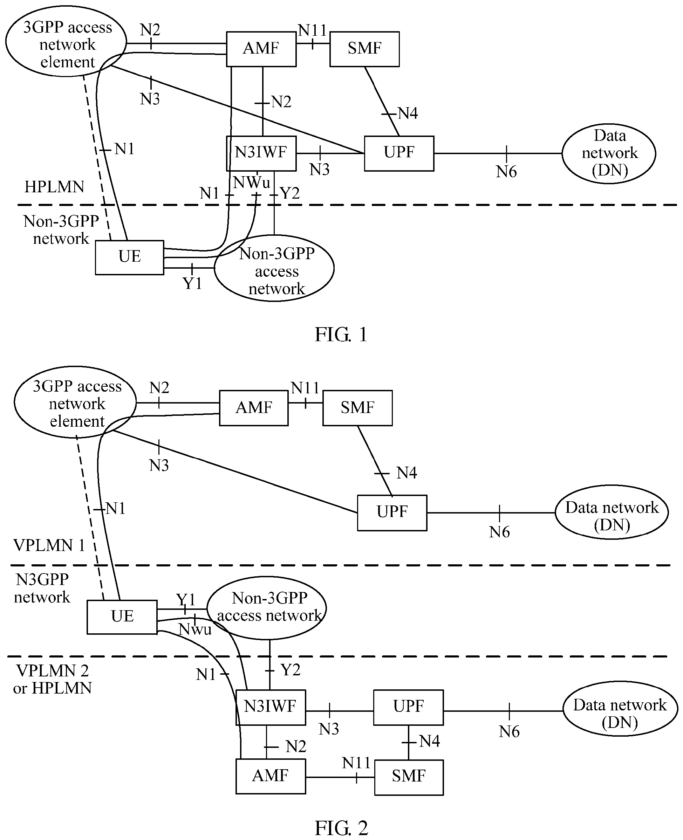

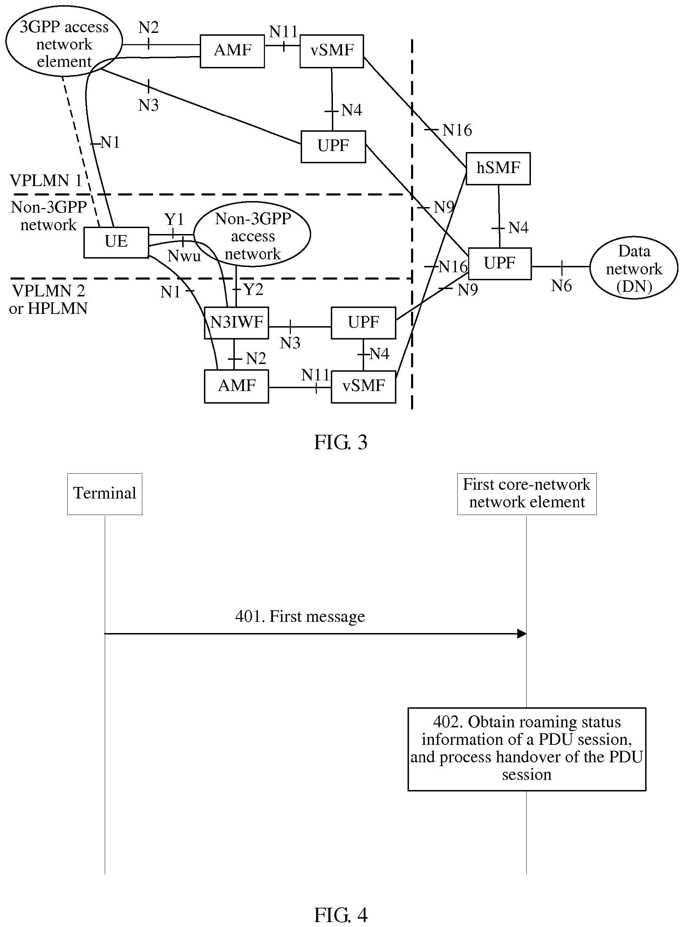

As shown in FIG. 1 to FIG. 3, each of FIG. 1 to FIG. 3 is a schematic diagram of a network architecture to which an embodiment of this application is applied. FIG. 1 is a non-roaming scenario , FIG. 2 is a roaming local breakout (local breakout, LBO) scenario, and FIG. 3 is a roaming home routed (home routed, HR) scenario.

For the scenario shown in FIG. 1, the schematic diagram of the network architecture includes user equipment (user equipment, UE), a 3GPP access network element, a non-3GPP (non-3GPP) access network, an N3IWF, an AMF network element, a session management function (session management function, SMF) network element, a user plane function (user plane function, UPF) network element, a data network (data network, DN) network element, and the like.

It should be understood that the UE is usually also referred to as a terminal, and the 3GPP access network element is also referred to as an access network (Radio Access network, R-AN) network element, for example, a base station in 5G The non-3GPP access network is an access network other than a 3GPP access network, for example, a wireless local area network (wireless local area networks, WLAN) access network. The N3IWF is similar to an evolved packet data gateway (evolved packet data gateway, ePDG) in LTE, and is configured to: when the UE accesses a 5G network through the non-3GPP access network, establish an Internet Protocol Security (internet protocol security, IPsec) tunnel to the UE. In a future 5G definition, the name N3IWF may be changed.

The AMF network element is responsible for access management and mobility management for the terminal. In actual application, the AMF network element includes a mobility management function of a mobility management entity (mobility management entity, MME) in a Long Term Evolution (long term evolution, LTE) network framework, and an access management function is added to the AMF network element.

The session management function (SMF) network element is responsible for session management, for example, establishment of a session of a user, that is, a session management function in an MME network element. The UPF network element is a functional network element of a user plane of the terminal, and is mainly responsible for connecting to an external network. The UPF network element includes functions related to a serving gateway (serving gateway, SGW) and a public data network (public data network, PDN) gateway (PDN-GW) of LTE. The data network (DN)is responsible for providing a service for the UE. For example, some DNs provide Internet access functions for the terminal, and other DNs provide SMS message functions for the terminal.

In the architecture shown in FIG. 1, the UE accesses a same core network by using a 3GPP access technology and a non-3GPP access technology. The core network includes some network elements such as the AMF network element, the SMF network element, the UPF network element, and the DN network element, and connection interfaces between the network elements. The architecture shown in FIG. 1 is mainly applicable to a non-roaming scenario.

The architectures shown in FIG. 2 and FIG. 3 are applicable to a roaming scenario. The terminal accesses different core networks by using a 3GPP access technology and a non-3GPP access technology. Main differences between the roaming scenario and the non-roaming scenario shown in FIG. 1 are: A PLMN used by the terminal to access the core network by using the 3GPP access technology is different from a PLMN used by the terminal to access the core network by using the non-3GPP access technology, and different AMF network elements are used to perform management and control on the terminal in the roaming scenario.

In addition, in any scenario shown in FIG. 1 to FIG. 3, when the terminal establishes a PDU session through the 3GPP or non-3GPP access network, if the PDU session is handed over, an IP address of the terminal may need or not need to be changed before and after the handover. That the IP address does not need to be changed before and after the handover may also be understood as that IP continuity of the terminal needs to be ensured, and that the IP address needs to be changed before and after the handover may also be understood as that the IP continuity of the terminal does not need to be ensured.

Optionally, in a specific implementation, IP continuity requirement information of the terminal corresponding to the PDU session before and after the handover may be determined depending on whether a UPF to which the PDU session of the terminal is connected changes before and after the handover. For example, if the UPF of the PDU session of the terminal does not change before and after the handover, that is, the PDU session has a UPF anchor, it is considered that the IP address does not need to be changed before and after the handover; or if the UPF of the PDU session of the terminal changes before and after the handover, that is, the PDU session does not have a UPF anchor, it is considered that the IP address needs to be changed before and after the handover.

Optionally, in another specific implementation, IP continuity requirement information of the terminal corresponding to the PDU session before and after the handover may alternatively be implemented based on a session and service continuity mode (Session and Service Continuity mode, SSC mode) defined in the prior art. For example, when the PDU session is in an SSC mode 1, it is considered that the IP address does not need to be changed before and after the handover; or when the PDU session is in an SSC mode 2 or an SSC mode 3, it is considered that the IP address needs to be changed before and after the handover. Definitions of the SSC modes are as follows:
SSC mode 1: The UPF anchor of the PDU session remains unchanged before and after the handover, and the IP address of the UE also remains unchanged.
SSC mode 2: The UPF of the PDU session changes before and after the handover. An original PDU session (that is, the PDU session before the handover) may be disconnected before a new PDU session (that is, the PDU session obtained after the handover) is established.
SSC mode 3: The UPF of the PDU session changes before and after the handover. An original PDU session (that is, the PDU session before the handover) may be disconnected after establishment of a new PDU session (that is, the PDU session obtained after the handover) is completed.

It should be understood that, for the foregoing definitions of the SSC modes, names of the SSC modes may change with development of technologies.

For ease of description, in this application, a first network is one of the 3GPP access network and the non-3GPP access network, and a second network is the other one of the 3GPP access network and the non-3GPP access network. In the embodiments of the claimed invention, the first network is the 3GPP access network and the second network is the non-3GPP access network.

In addition, in the embodiments of the claimed invention, the first network is an access network after the handover of the PDU session of the terminal, and the second network is an access network before the handover of the PDU session of the terminal.

Currently, for the terminal in the architecture shown in FIG. 1, when the PDU session of the terminal is handed over from a second network shown in FIG. 1 to a first network shown in FIG. 1, the terminal may hand over the PDU session based on a current method in the related prior art. However, when the terminal is in the second network shown in FIG 1 and the terminal needs to be handed over to a first network shown in FIG. 2 or FIG. 3, or when the terminal is in a second network shown in FIG. 2 or FIG. 3 and the terminal needs to be handed over to the first network shown in FIG. 1 or FIG. 2 or FIG. 3, there is no related solution.

For the foregoing existing problem, an embodiment of this application provides a PDU session processing method, as shown in FIG. 4. FIG. 4 is a schematic flowchart. The method includes the following steps.

Step 401: A terminal sends a first message to a first core-network network element through a first network, and the first core-network network element receives the first message from the terminal.

The first message includes handover indication information, to instruct the first core-network network element to hand over a PDU session from a second network to the first network.

The PDU session is established by the terminal through the second network before step 401.

The first core-network network element is a network element having an access and mobility management function. In particular, the first core-network network element is an AMF network element, and the first core-network network element is a network element in the first network. For example, if the first core-network network element is a network element in FIG. 1, because there is only one core network in the architecture shown in FIG. 1, the first core-network network element may be the AMF network element in FIG. 1. For another example, if the first core-network network element is a network element in FIG. 2 or FIG. 3, because there are two AMF network elements in FIG. 2 or FIG. 3, if in an example not covered by the claimed invention the PDU session of the terminal is currently in a 3GPP access network, the first core-network network element may be an AMF network element in a core network corresponding to a non-3GPP access network; or in the claimed invention, the PDU session of the terminal is currently in a non-3GPP access network, the first core-network network element may be an AMF network element in a core network corresponding to a 3GPP access network.

In an implementation, the first message is a PDU session establishment request message.

In a possible implementation not covered by the claimed invention, the terminal determines, based on IP continuity requirement information, that the first message needs to be initiated.

In a possible implementation not covered by the claimed invention, the terminal determines that an SSC mode of the PDU session is an SSC mode 1 or an SSC mode 3.

Step 402: The first core-network network element obtains roaming status information of the PDU session, and processes handover of the PDU session based on the roaming status information.

The roaming status information of the PDU session is used to indicate a roaming status of the PDU session, for example, including local breakout, home routed, non-roaming, and the like. It should be noted that, with development of communications technologies, another roaming status may be added subsequently.

In a possible implementation, if the roaming status information of the PDU session is home routed or non-roaming, the first core-network network element establishes the PDU session in the first network, that is, allows the PDU session to be handed over from the second network to the first network, and establishes the PDU session in the first network.

In a possible implementation, if the roaming status information of the PDU session is local breakout, and the first core-network network element and a session management network element corresponding to the PDU session do not belong to a same PLMN, the first core-network network element rejects establishment of the PDU session in the first network.

In another possible implementation, if the roaming status information of the PDU session is local breakout, the first core-network network element rejects establishment of the PDU session in the first network, that is, does not allow the PDU session to be handed over from the second network to the first network, and rejects establishment of the PDU session.

In another possible implementation not covered by the claimed invention, the first core-network network element may alternatively process the handover of the PDU session based on the roaming status information of the PDU session and IP continuity requirement information of the terminal corresponding to the PDU session before and after the handover. The IP continuity requirement information of the terminal corresponding to the PDU session before and after the handover may be used to indicate whether IP continuity of the terminal needs to be ensured.

In a possible implementation not covered by the claimed invention, if the roaming status information of the PDU session is local breakout, and the IP continuity of the terminal needs to be ensured, the first core-network network element rejects establishment of the PDU session in the first network. For example, in an implementation not covered by the claimed invention, when the SSC mode of the PDU session is the SSC mode 1, the first core-network network element rejects establishment of the PDU session in the first network.

In a possible implementation not covered by the claimed invention, if the roaming status information of the PDU session is local breakout, and the IP continuity of the terminal does not need to be ensured, the first core-network network element establishes the PDU session in the first network. For example, in an implementation not covered by the claimed invention, when the SSC mode of the PDU session is the SSC mode 2 or the SSC mode 3, the first core-network network element establishes the PDU session in the first network.

In another possible implementation not covered by the claimed invention if the SSC mode of the PDU session is the SSC mode 2, the first core-network network element rejects establishment of the PDU session in the first network regardless of whether the roaming status information of the PDU session is local breakout, home routed, or non-roaming.

In another possible implementation not covered by the claimed invention, if the SSC mode of the PDU session is the SSC mode 1 or the SSC mode 3, and the roaming status information of the PDU session is home routed or non-roaming, the first core-network network element establishes the PDU session in the first network.

In another possible implementation not covered by the claimed invention, if the SSC mode of the PDU session is the SSC mode 1 or the SSC mode 3, and the roaming status information of the PDU session is local breakout, the first core-network network element rejects establishment of the PDU session in the first network.

In the foregoing embodiment, when the terminal sends the handover indication information to the first core-network network element through the first network to request to hand over the PDU session, the first core-network network element determines, based on the roaming status information of the PDU session, whether to hand over the PDU session, for example, determines to hand over the PDU session and establishes the PDU session, or rejects the handover of the PDU session, thereby providing the PDU session processing method when the terminal is in a roaming or non-roaming scenario.

Optionally, and not covered by the claimed invention whether to hand over the PDU session may alternatively be determined based on the roaming status information of the PDU session and the IP continuity requirement information of the terminal corresponding to the PDU session before and after the handover.

In the foregoing embodiment, the roaming status information of the PDU session is determined by the first core-network network element based on identifier information of the session management network element corresponding to the PDU session. Optionally, the session management network element may be an SMF network element. The first core-network network element obtains the identifier information of the session management network element corresponding to the PDU session from a data management network element (for example, the data management network element may be a UDM network element). Further, the identifier information of the session management network element includes a PLMN identifier. The roaming status information of the PDU session is determined based on the PLMN identifier.

In this embodiment of this application, the identifier information of the session management network element corresponding to the PDU session is identifier information of a session management network element corresponding to the PDU session before the handover.

Specifically, if the first core-network network element is in a visited public land mobile network (VPLMN), and the session management network element corresponding to the PDU session is in a home public land mobile network (HPLMN), the roaming status information of the PDU session is home routed. If both the first core-network network element and the session management network element corresponding to the PDU session are in an HPLMN, the roaming status information of the PDU session is non-roaming. If both the first core-network network element and the session management network element corresponding to the PDU session are in a VPLMN, the roaming status information of the PDU session is local breakout.

In this embodiment of this application, when the PDU session is in a home routed state, the session management network element is a home domain session management network element.

In this embodiment of this application, a PLMN in which the PDU session is established for the terminal is the same as a PLMN in which the first core-network network element is located.

In a possible implementation not covered by the claimed invention, the first core-network network element may obtain the identifier information of the session management network element corresponding to the PDU session from the data management network element in a registration process. For a detailed method, refer to the prior art.

Optionally, and not covered by the claimed invention the roaming status information of the PDU session may alternatively be sent by an AMF network element in the second network to the terminal in a process in which the terminal establishes the PDU session in the second network, so that in step 401, when sending the first message to the first core-network network element through the first network, the terminal may add the roaming status information of the PDU session to the first message. Therefore, the first core-network network element may obtain the roaming status information of the PDU session from the first message.

Optionally, and not covered by the claimed invention the roaming status information of the PDU session may alternatively be stored by the session management network element (for example, the session management network element may be an SMF network element) to the data management network element in a process in which the terminal establishes the PDU session in the second network, so that the first core-network network element may obtain the roaming status information of the PDU session from the data management network element.

In the foregoing embodiment, optionally, and not covered by the claimed invention the IP continuity requirement information of the terminal corresponding to the PDU session may be stored by the session management network element to the data management network element in the process in which the terminal establishes the PDU session in the second network, so that the first core-network network element may obtain the IP continuity requirement information of the terminal corresponding to the PDU session from the data management network element.

Optionally, and not covered by the claimed invention, alternatively, in step 401, when sending the first message to the first core-network network element through the first network, the terminal may add the IP continuity requirement information of the terminal corresponding to the PDU session to the first message, so that the first core-network network element may obtain the IP continuity requirement information of the terminal corresponding to the PDU session from the first message.

Optionally, and not covered by the claimed invention, in another implementation, if the SSC mode of the PDU session is the SSC mode 2, the terminal does not send the first message to the first core-network network element regardless of whether the roaming status information of the PDU session is local breakout, home routed, or non-roaming. That is, in this implementation, when the SSC mode of the PDU session is the SSC mode 2, the PDU session processing method provided in this embodiment of this application is not performed.

Another embodiment of this application, not covered by the claimed invention, provides another PDU session processing method. For a same part between this embodiment and the embodiment shown in FIG. 4, refer to descriptions of the embodiment in FIG. 4. Specifically, the method includes:
A first core-network network element receives a first message from a terminal through a first network, where the first message includes handover indication information, and the handover indication information is used to instruct the first core-network network element to hand over a PDU session from a second network to the first network. For details, refer to descriptions of step 401. The first core-network network element processes the handover of the PDU session based on identifier information of a session management network element corresponding to the PDU session.

Specifically, the processing, by the first core-network network element, the handover of the PDU session based on identifier information of a session management network element corresponding to the PDU session includes the following manners:
If the first core-network network element determines, based on the identifier information of the session management network element, that the first core-network network element can be connected to the session management network element, the first core-network network element establishes the PDU session in the first network. In a possible implementation, if the first core-network network element determines, based on the identifier information of the session management network element, that the first core-network network element and the session management network element belong to a same PLMN, the first core-network network element can be connected to the session management network element; or if the first core-network network element determines, based on the identifier information of the session management network element, that a PLMN in which the PDU session is established for the terminal is the same as a PLMN in which the session management network element is located, the first core-network network element can be connected to the session management network element.

If the first core-network network element determines, based on the identifier information of the session management network element, that the first core-network network element cannot be connected to the session management network element, the first core-network network element rejects establishment of the PDU session in the first network. In a possible implementation, if the first core-network network element determines, based on the identifier information of the session management network element, that the first core-network network element and the session management network element do not belong to a same PLMN, the first core-network network element cannot be connected to the session management network element; or if the first core-network network element determines, based on the identifier information of the session management network element, that a PLMN in which the PDU session is established for the terminal is different from a PLMN in which the session management network element is located, the first core-network network element cannot be connected to the session management network element.

In a possible implementation, the first core-network network element determines, based on the identifier information of the session management network element, that the first core-network network element and the session management network element do not belong to a same PLMN, and a PLMN in which the session management network element is located is a visited PLMN; and the first core-network network element rejects establishment of the PDU session in the first network.

In this embodiment, if the PLMN in which the session management network element is located is a VPLMN, it indicates that the roaming status information of the PDU session is local breakout.

In this embodiment, for detailed content of the identifier information of the session management network element, refer to descriptions of step 402.

In a possible manner, the first core-network network element processes the handover of the PDU session based on the identifier information of the session management network element and Internet Protocol (IP) continuity requirement information of the terminal corresponding to the PDU session before and after the handover. For details, refer to the descriptions of step 402. The solutions provided in the embodiments of this application are described above mainly from a perspective of interaction between network elements. It may be understood that, to implement the first core-network network element, the first core-network network element includes corresponding hardware structures and/or software modules for performing the functions. A person skilled in the art should be easily aware that, in combination of the units and algorithm steps of the examples described in the embodiments disclosed in this specification, this application can be implemented by using hardware or a combination of hardware and computer software. Whether a function is performed by using hardware or by computer software driving hardware depends on particular applications and implementation constraint conditions of the technical solutions. A person skilled in the art may use different methods to implement the described functions for each particular application, but it should not be considered that the implementation goes beyond the scope of this application.

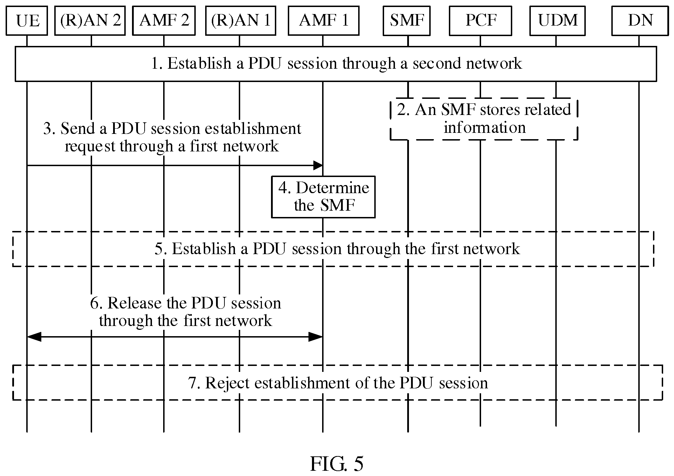

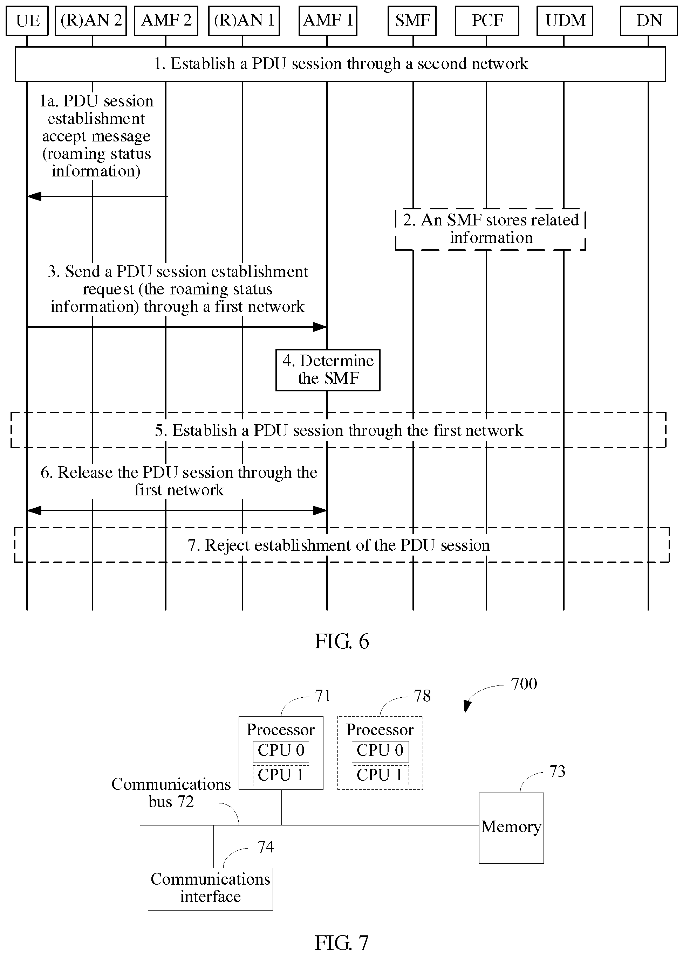

The PDU session processing method provided in this embodiment of this application is described by using examples with reference to FIG. 5 and FIG. 6.

As shown in FIG. 5, FIG. 5 is a flowchart of a PDU session processing method according to an embodiment of this application which is not covered by the claimed invention. UE in FIG. 5 is the terminal in the embodiment of this application; an AMF 1 network element is the AMF network element in the first network, and the AMF 1 network element is an implementation of the first core-network network element in the embodiment of this application; a RAN 1 is an access-network network element in the first network; an AMF 2 is the AMF network element in the second network; a RAN 2 is an access-network network element in the second network; an SMF network element is a specific implementation of the session management network element; a policy control function (policy control function, PCF) network element may be configured to implement a radio channel control function related to packet data, and convert, manage, and control a packet data service performed by the terminal; and a UDM network element is a specific implementation of the data management network element, and may be configured to store related information. It should be noted that in FIG. 5, there may alternatively be two or more SMF network elements, two or more PCF network elements, two or more UDM network elements, and two or more DN network elements. A person skilled in the art may deduce a specific setting of the core-network network element based on a specific application scenario.

The method shown in FIG. 5 includes the following steps.

Step 1: The UE establishes a PDU session in the second network.

The second network is an access network in which the PDU session of the UE (that is, the terminal) is currently located.

Step 2: The SMF network element stores related information.

In a process of establishing the PDU session in the second network, the SMF network element may store SMF identifier information and an identifier of the PDU session to the UDM network element.

If there are a plurality of SMF network elements in a 5G architecture, the SMF network element is an SMF network element in the second network.

Optionally, the SMF network element further stores roaming status information to the UDM network element.

Optionally, the SMF network element further stores IP continuity requirement information of the terminal corresponding to the PDU session to the UDM network element. A possible implementation is that the SMF network element stores an SSC mode of the PDU session to the UDM.

Optionally, the SMF network element may further first determine whether the UDM stores the roaming status information corresponding to the PDU session. If the UDM does not store the roaming status information corresponding to the PDU session, the SMF network element sends the roaming status information to the UDM.

Step 3: The UE sends a PDU session establishment request message to the AMF 1 network element through the first network.

The AMF 1 is the first core-network network element in the first network.

The PDU session establishment request message includes handover indication information. Optionally, the PDU session establishment request message further includes the identifier of the PDU session.

Step 4: The AMF 1 network element determines the SMF network element.

In this step, the AMF 1 network element determines whether the SMF network element corresponding to the PDU session can be found locally, and if the SMF network element corresponding to the PDU session is found locally, it indicates that there is only one core network, that is, there is only one SMF network element, in the 5G architecture, for example, the architecture shown in FIG. 1. In this case, the PDU session may be handed over according to a related method in the prior art. This does not belong to the discussion scope of this application. If the SMF network element corresponding to the PDU session is not found locally, the UDM network element is searched for the SMF network element. Optionally, if the UDM network element stores session roaming information corresponding to the PDU session, the session roaming information corresponding to the PDU session is further obtained from the UDM network element. Optionally, if the UDM network element stores the IP continuity requirement information of the terminal corresponding to the PDU session, the IP continuity requirement information of the terminal corresponding to the PDU session is further obtained from the UDM network element. Optionally, if the PDU session establishment request message carries the session roaming information corresponding to the PDU session, the session roaming information corresponding to the PDU session is obtained from the PDU session establishment request message. Optionally, if the PDU session establishment request message carries the IP continuity requirement information of the terminal corresponding to the PDU session, the IP continuity requirement information of the terminal corresponding to the PDU session is obtained from the PDU session establishment request message.

Step 5: When the AMF 1 determines that the PDU session can be handed over, the AMF 1 establishes the PDU session through the first network.

Step 6: Release the PDU session through the first network. The procedure ends.

Optionally, if the PDU session corresponds to an SSC mode 1, the AMF 1 network element initiates a PDU session release procedure to the UE; or if the PDU session corresponds to an SSC mode 2 or an SSC mode 3, the UE initiates a PDU session release procedure to the AMF 1 network element.

Step 7: When the AMF 1 network element determines that the PDU session cannot be handed over, the AMF 1 network element rejects establishment of the PDU session. The procedure ends.

Optionally, the AMF 1 network element sends a handover rejection message to the UE.

It should be noted that step 5 and step 7 are performed at different times. In addition, only a processing procedure related to this application is described in the foregoing steps, and specific implementation details thereof are not completely shown in the figure. A person skilled in the art is able to deduce a specific implementation thereof with reference to this application and the prior art.

As shown in FIG. 6, FIG. 6 is a flowchart of another PDU session processing method according to an embodiment of this application which is not covered by the claimed invention. This flowchart is substantially the same as the flowchart shown in FIG. 5, and main differences between the two flowcharts are: In a procedure shown in FIG. 6, step 1a of sending, by the AMF 2 network element, a PDU session establishment accept message to the UE is added after step 1, where the message includes roaming status information; and the PDU session establishment request message sent by the UE to the AMF 1 network element in step 3 includes the roaming status information, that is, the roaming status information of the PDU session is sent by the UE to the AMF 1 network element by using the PDU session establishment request message. For specific implementations of other steps in the procedure shown in FIG. 6, refer to related descriptions in the embodiment shown in FIG. 5, and details are not described herein again.

It should be noted that the embodiments shown in FIG. 5 and FIG. 6 are merely examples of specific implementations. In actual application, there may be another implementation, and the another implementation shall fall within the protection scope of this application provided that the another implementation conforms to the procedure shown in FIG. 4.

As shown in FIG. 7, an embodiment of this application further provides a PDU session processing apparatus 700. The PDU session processing apparatus 700 includes at least one processor 71, a communications bus 72, a memory 73, and at least one communications interface 74. The apparatus 700 is the first core-network network element in the embodiments of this application. In particular, the apparatus 700 is the AMF network element in FIG. 1 to FIG. 3, or may be the AMF 1 network element in FIG 5 and FIG. 6 which are not covered by the claimed invention. The apparatus 700 is configured to perform the foregoing methods in the claimed embodiments of this application.

The processor 71 may be a general-purpose central processing unit (CPU), a microprocessor, an application-specific integrated circuit (application-specific integrated circuit, ASIC), or one or more integrated circuits configured to control execution of a program in the solutions of this application.

The communications bus 72 may include a path for transmitting information between the foregoing components. The communications interface 74 may be any apparatus such as a transceiver, and is configured to communicate with another device or a communications network such as Ethernet, a radio access network (RAN), or a WLAN.

The memory 73 may be a read-only memory (read-only memory, ROM) or another type of static storage device that can store static information and a static instruction; or a random access memory (random access memory, RAM) or another type of dynamic storage device that can store information and an instruction; or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by the apparatus, but is not limited thereto. The memory may independently exist and be connected to the processor by using a bus. Alternatively, the memory may be integrated with the processor.

The memory 73 is configured to store application program code for performing the solutions of this application, and execution of the application program code is controlled by the processor 71. The processor 71 is configured to execute the application program code stored in the memory 73.

During specific implementation, in an embodiment, the processor 71 may include one or more CPUs, for example, a CPU 0 and a CPU 1 in FIG. 7.

During specific implementation, in an embodiment, the apparatus 700 may include a plurality of processors, for example, a processor 71 and a processor 78 in FIG. 7. Each of these processors may be a single-core (single-CPU) processor, or may be a multi-core (multi-CPU) processor. The processor herein may be one or more devices, circuits, and/or processing cores used to process data (such as a computer program instruction).

For example, the AMF network element in FIG. 1 to FIG. 3 is the apparatus shown in FIG. 7, and a memory of the AMF network element stores one or more software modules. The AMF network element implements the software module by using a processor and program code in the memory, to implement the claimed PDU session processing.

Alternatively, and not covered by the claimed invention, the first core-network network element in FIG. 4 may be the apparatus shown in FIG. 7, and a memory of the first core-network network element stores one or more software modules. The first core-network network element may implement the software module by using a processor and program code in the memory, to implement PDU session processing.

Alternatively, and not covered by the claimed invention the AMF 1 network element in FIG. 5 and FIG. 6 may be the apparatus shown in FIG. 7, and a memory of the AMF 1 network element stores one or more software modules. The AMF 1 network element may implement the software module by using a processor and program code in the memory, to implement PDU session processing.

In this embodiment of this application, functional modules of the first core-network network element may be divided based on the foregoing method examples. For example, functional modules may be divided corresponding to functions, or two or more functions may be integrated into one processing module. The integrated module may be implemented in a form of hardware, or may be implemented in a form of a software functional module. It should be noted that module division in this embodiment of this application is an example and is merely logical function division. During actual implementation, there may be another division manner.

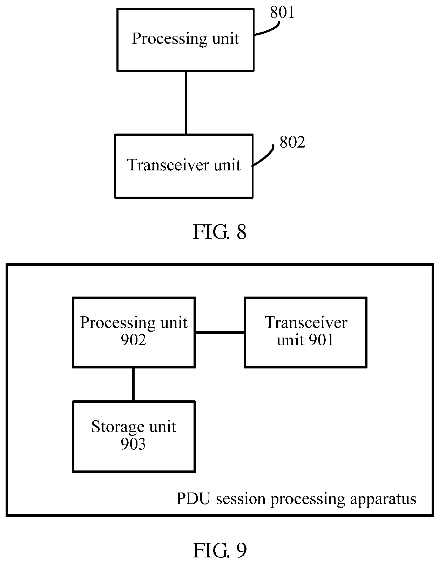

For example, when the functional modules are divided corresponding to the functions, FIG. 8 is a possible schematic structural diagram of a PDU session processing apparatus not covered by the claimed invention. The apparatus 800 may be the first core-network network element, the session management network element, or the terminal in the foregoing embodiments. The apparatus 800 includes a processing unit 801 and a transceiver unit 802.

When the apparatus 800 is the first core-network network element, the transceiver unit receives a first message from a terminal through a first network, where the first message includes handover indication information, and the handover indication information is used to instruct the first core-network network element to hand over a packet data unit PDU session from a second network to the first network.

The processing unit is configured to process the handover of the PDU session based on roaming status information of the PDU session.

Optionally, the processing unit is specifically configured to: if the roaming status information of the PDU session is home routed or non-roaming, establish the PDU session in the first network.

Optionally, the processing unit is specifically configured to: if the roaming status information of the PDU session is local breakout, reject establishment of the PDU session in the first network.

Optionally, the processing unit is specifically configured to: if the roaming status information of the PDU session is local breakout, and the first core-network network element and a session management network element corresponding to the PDU session in the first network do not belong to a same PLMN, reject establishment of the PDU session in the first network.

Optionally, the processing unit is specifically configured to:
process the handover of the PDU session based on the roaming status information of the PDU session and Internet Protocol IP continuity requirement information of the terminal corresponding to the PDU session before and after the handover.

Optionally, the processing unit is specifically configured to:
if the roaming status information of the PDU session is local breakout, and IP continuity of the terminal needs to be ensured, reject establishment of the PDU session in the first network.
Optionally, the processing unit is specifically configured to:
   if the roaming status information of the PDU session is local breakout, and IP continuity of the terminal does not need to be ensured, establish the PDU session in the first network.

Optionally, the processing unit is further configured to:
determine the roaming status information of the PDU session based on identifier information of the session management network element corresponding to the PDU session.

Optionally, the processing unit is further configured to:
obtain the roaming status information of the PDU session from a data management network element.

Optionally, the first message further includes the roaming status information, and the processing unit is further configured to obtain the roaming status information of the PDU session from the first message.

Optionally, the processing unit is further configured to:
obtain the IP continuity requirement information of the terminal corresponding to the PDU session from a unified data management UDM network element.

Optionally, the first message further includes the IP continuity requirement information of the terminal corresponding to the PDU session, and the processing unit is further configured to obtain the IP continuity requirement information of the terminal corresponding to the PDU session from the first message.

In another implementation, the transceiver unit is configured to receive a first message from a terminal through a first network, where the first message includes handover indication information, and the handover indication information is used to instruct the first core-network network element to hand over a packet data unit PDU session from a second network to the first network.

The processing unit is configured to: when an SSC mode of the PDU session is an SSC mode 2, reject establishment of the PDU session.

When the apparatus 800 is the session management network element, the processing unit is configured to store one or more of roaming status information of a PDU session, IP continuity requirement information of a terminal corresponding to the PDU session, and identifier information of the session management network element, to a data management network element.

Optionally, the data management network element may be a UDM network element.

When the apparatus 800 is the terminal, the transceiver unit is configured to send a first message to a first core-network network element, where the first message includes handover indication information, and the handover indication information is used to instruct the first core-network network element to hand over a PDU session from a second network to a first network; and the transceiver unit is further configured to receive a second message from the first core-network network element, where the second message is used to indicate a PDU session processing result.

Optionally, the second message is used to instruct to establish the PDU session.

Optionally, the second message is used to instruct to reject the handover of the PDU session.

Optionally, the first message includes roaming status information.

Optionally, the first message includes IP continuity requirement information of the terminal corresponding to the PDU session.

Optionally, the first message includes an identifier of the PDU session.

In this embodiment, the apparatus is represented by dividing the functional modules corresponding to the functions, or the apparatus is represented by integrating the functional modules. The "module" herein may be an application-specific integrated circuit (application-specific integrated circuit, ASIC), a circuit, a processor that executes one or more software or firmware programs and a memory, an integrated logic circuit, and/or another device that can provide the foregoing function. In a simple embodiment, a person skilled in the art may conceive that the PDU session processing apparatus 800 may be implemented in the manner shown in FIG. 7. For example, the processing unit 801 and the transceiver unit 802 in FIG. 8 may be implemented by using the processor 71 (and/or the processor 78) and the memory 73 in FIG. 7. Specifically, the processing unit 801 and the transceiver unit 802 may be executed by invoking, by the processor 71 (and/or the processor 78), the application program code stored in the memory 73. This is not limited in this embodiment of this application.

FIG. 9 is a schematic diagram of a PDU session processing apparatus not covered by the claimed invention. The PDU session processing apparatus includes a transceiver unit 901, a processing unit 902, and a storage unit 903. The transceiver unit 901, the processing unit 902, and the storage unit 903 may be physically separated units, or may be integrated into one or more physical units. This is not limited herein.

The transceiver unit 901 is configured to implement content exchange between the processing unit 902 and another unit or network element. Specifically, the transceiver unit 901 may be a communications interface of the PDU session processing apparatus, or may be a transceiver circuit or a transceiver, or may be a transceiver machine. The transceiver unit 901 may alternatively be a communications interface or a transceiver circuit of the processing unit 902. Optionally, the transceiver unit 901 may be a transceiver chip.

Although FIG. 9 shows only one transceiver unit 901, the PDU session processing apparatus may include a plurality of transceiver units 901, or the transceiver unit 901 includes a plurality of sub transceiver units. The transceiver unit 901 may further include a sending unit and a receiving unit, configured to perform corresponding sending and receiving operations.

The processing unit 902 is configured to implement data processing performed by the PDU session processing apparatus. The processing unit 902 may be a processing circuit or may be a processor. The processor may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (Generic Array Logic, GAL), or any combination thereof.

Although FIG. 9 shows only one processing unit 902, the PDU session processing apparatus may include a plurality of processing units, or the processing unit 902 includes a plurality of sub data processing units. Specifically, the processor may be a single-core (single-CPU) processor, or may be a multi-core (multi-CPU) processor.

The storage unit 903 is configured to store a computer instruction executed by the processing unit 902. The storage unit 903 may be a storage circuit or may be a memory. The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache.

The storage unit 903 may be a unit independent of the processing unit 902, or may be a storage unit in the processing unit 902. This is not limited herein. Although FIG. 9 shows only one storage unit 903, the PDU session processing apparatus may include a plurality of storage units 903, or the storage unit 903 includes a plurality of sub storage units.

In the embodiments of this application, the processing unit 902 may exchange content with another network element by using the transceiver unit 901. For example, the processing unit 902 obtains or receives content from the another network element. If the processing unit 902 and the transceiver unit 901 are two physically separated components, the processing unit 902 may exchange content with another unit in the PDU session processing apparatus without using the transceiver unit 901.

In a possible implementation, the transceiver unit 901, the processing unit 902, and the storage unit 903 may be connected to each other by using a bus. The bus may be a peripheral component interconnect (peripheral component interconnect, PCI) bus, an extended industry standard architecture (industry standard architecture, EISA) bus, or the like. The bus may be classified into an address bus, a data bus, a control bus, or the like.

In this embodiment of this application, the processing unit 902 enables, based on the computer instruction stored in the storage unit 903, the PDU session processing apparatus to implement the method in any embodiment in FIG. 4 to FIG. 6 in this application.

In this embodiment of this application, the PDU session processing apparatus may be a data processing chip or a data processing chip module, for example, a system on chip (System on Chip, SoC).

Specifically, the PDU session processing apparatus may be an access and mobility management network element, a session management network element, or a terminal device.

When the PDU session processing apparatus is an access and mobility management network element, in a possible implementation, the transceiver unit 901 is configured to receive a first message from a terminal through a first network, where the first message includes handover indication information, and the handover indication information is used to instruct the processing unit 902 to hand over a PDU session from a second network to the first network. The processing unit is configured to process the handover of the PDU session based on identifier information of a session management network element corresponding to the PDU session.

In a possible implementation, the processing unit 902 is configured to determine, based on the identifier information of the session management network element, that the PDU session processing apparatus can be connected to the session management network element; and the processing unit 902 is configured to establish the PDU session in the first network.

In a possible implementation, the processing unit 902 is configured to determine, based on the identifier information of the session management network element, that the PDU session processing apparatus cannot be connected to the session management network element; and the processing unit 902 is configured to reject establishment of the PDU session in the first network.

In a possible implementation, the processing unit 902 is configured to determine, based on the identifier information of the session management network element, that the first core-network network element and the session management network element do not belong to a same PLMN, and a PLMN in which the session management network element is located is a visited PLMN; and the processing unit 902 is configured to reject establishment of the PDU session in the first network.

In a possible implementation, the processing unit 902 is configured to determine, based on the identifier information of the session management network element, that the PDU session processing apparatus and the session management network element belong to a same public land mobile network PLMN; and the processing unit 902 is configured to establish the PDU session in the first network.

In a possible implementation, the processing unit 902 is configured to determine, based on the identifier information of the session management network element, that the PDU session processing apparatus and the session management network element do not belong to a same PLMN; and the processing unit 902 is configured to reject establishment of the PDU session in the first network.

In a possible implementation, the identifier information of the session management network element includes identifier information of the PLMN in which the session management network element is located.

In a possible implementation, the transceiver unit 901 is further configured to obtain the identifier information of the session management network element from a data management network element.

In a possible implementation, the processing unit 902 is configured to process the handover of the PDU session based on the identifier information of the session management network element and Internet Protocol IP continuity requirement information of the terminal corresponding to the PDU session before and after the handover.

In this embodiment, the transceiver unit 901 is configured to implement content receiving and sending operations between the AMF network element and an external network element in the embodiment corresponding to FIG. 5 or FIG. 6 in this application. The processing unit 902 is configured to implement a data or signaling processing operation in the AMF network element in the embodiment corresponding to FIG. 5 or FIG. 6 in this application.

In this embodiment, the processing unit 902 enables, based on the computer instruction stored in the storage unit 903, the PDU session processing apparatus to implement operations of the AMF network element in the embodiment corresponding to FIG. 5 or FIG. 6 in this application, for example:
receiving, by the transceiver unit 901, the first message from the terminal through the first network, where the first message includes the handover indication information, and the handover indication information is used to instruct the processing unit 902 to hand over the PDU session from the second network to the first network; and processing the handover of the PDU session based on the identifier information of the session management network element corresponding to the PDU session.

An embodiment of this application provides another PDU session processing apparatus. The apparatus includes a storage unit 903, a processing unit 902, and a transceiver unit 901. The storage unit 903 is configured to store a computer instruction. The processing unit 902 is configured to perform the following operations based on the computer instruction stored in the storage unit 903: receiving, by the transceiver unit 901, a first message from a terminal, where the first message includes handover indication information, and the handover indication information is used to instruct the processing unit 902 to hand over a PDU session from a second network to the first network; and processing the handover of the PDU session based on roaming status information of the PDU session.

In a possible implementation, the transceiver unit 901 may be a communications interface of the PDU session processing apparatus, the processing unit 902 may be a processor of the PDU session processing apparatus, and the storage unit 903 may be a memory of the PDU session processing apparatus.

An embodiment of this application further provides a computer storage medium, configured to store computer software instructions used by the PDU session processing apparatus shown in FIG. 7. The computer software instructions include program code designed to perform the foregoing method embodiments. PDU session processing may be implemented by executing the stored program code.

An embodiment of this application not covered by the claimed invention further provides a computer program product. The computer program product includes a computer software instruction, and the computer software instruction may be loaded by using a processor to implement the methods in the foregoing method embodiments.

An embodiment of this application not covered by the claimed invention further provides a chip. The chip includes a processor and a transceiver component. Optionally, the chip further includes a storage unit, and the chip may be configured to perform the methods in the foregoing embodiments of this application.

Although this application is described with reference to the embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are described in dependent claims that are different from each other, but this does not mean that these measures cannot be combined to produce a better effect.

A person skilled in the art should understand that the embodiments of this application may be provided as a method, an apparatus (device), or a computer program product. Therefore, this application may be in a form of hardware only embodiments, software only embodiments, or embodiments with a combination of software and hardware. They are collectively referred to as "modules" or "systems". Moreover, this application may be in a form of a computer program product that is implemented on one or more computer usable storage media (including but not limited to a disk memory, a CD-ROM, an optical memory, and the like) that include computer usable program code. The computer program is stored/distributed in a proper medium, and is provided together with other hardware or used as a part of hardware, or may alternatively be in another distribution form, such as by using the Internet or another wired or wireless telecommunications system.

This application is described with reference to the flowcharts and/or block diagrams of the method, the apparatus (device), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may also be stored in a computer readable memory that can instruct the computer or the another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although this application is described with reference to specific features and the embodiments thereof, apparently, various modifications and combinations may be made to them without departing from the scope of this application. Correspondingly, the specification and accompanying drawings are merely examples of descriptions of this application defined by the appended claims.

## Claims

1. A packet data unit, PDU, session processing method, comprising:
receiving (401), by a access and mobility management function, AMF, network element, a message from a terminal through a first network, wherein the message comprises handover indication information, and the handover indication information instructs the AMF network element to hand over a PDU session from a second network to the first network;
**characterized by**
processing, by the AMF network element, the handover of the PDU session based on identifier information of a session management network element corresponding to the PDU session comprising:
obtaining, by the AMF network element, the identifier information of the session management network element from a data management network element; and
determining, by the AMF network element based on the identifier information of the session management network element, that the AMF network element and the session management network element belong to a same public land mobile network, PLMN and establishing, by the AMF network element, the PDU session in the first network;
or
determining, by the AMF network element based on the identifier information of the session management network element, that the AMF network element and the session management network element do not belong to a same PLMN and rejecting, by the AMF network element, establishment of the PDU session in the first network.

2. The method according to any one of claim 1, wherein the identifier information of the session management network element comprises identifier information of the PLMN in which the session management network element is located.

3. The method according to claim 1 or 2, wherein the first network is a 3rd generation partnership project, 3GPP, access network and the second network is a non-3GPP access network.

4. The method according to any one of claims 1 to 3, wherein the PDU session is in a home routed state.

5. The method according to any one of claims 1 to 4, wherein the identifier information of the session management network element is identifier information of a session management network element corresponding to the PDU session before the handover.

6. The method according to any one of claims 1 to 5, wherein the message is a PDU session establishment request message.

7. A computer readable storage medium, wherein the computer readable storage medium stores an instruction, and when the instruction runs on an access and mobility function, AMF, network element, the AMF network element is enabled to perform the method according to any one of claims 1 to 6.

8. An access and mobility management function, AMF, network element (700), comprising:
at least one processor (71, 78) coupled with a memory (73), wherein the at least one processor (71, 78) is configured to execute instructions stored in the memory (73), to enable the AMF network element (700) to perform the method in any one of claims 1 to 6.

9. A system, comprising:
an access and mobility management function, AMF, network element, configured to carry out the method according to any one one of claims 1 to 6; and
a data management network element, configured to provide identifier information of a session management network element to the access and mobility management function, AMF, network element.

## Patentansprüche

1. Paketdateneinheits(packet data unit - PDU)-Sitzungsverarbeitungsverfahren, das Folgendes umfasst:
Empfangen (401), durch ein Zugriffs- und Mobilitätsverwaltungsfunktions(access and mobility management function - AMF)-Netzelement, einer Nachricht von einem Endgerät durch ein erstes Netz, wobei die Nachricht Übergabeanzeigeinformationen umfasst und die Übergabeanzeigeinformationen das AMF-Netzelement anweisen, um eine PDU-Sitzung von einem zweiten Netz an das erste Netz zu übergeben;
**gekennzeichnet durch** Folgendes:
Verarbeiten, **durch** das AMF-Netzelement, der Übergabe der PDU-Sitzung basierend auf Kennungsinformationen eines Sitzungsverwaltungsnetzelements, das der PDU-Sitzung entspricht, das Folgendes umfasst:
Erhalten, **durch** das AMF-Netzelement, der Kennungsinformationen des Sitzungsverwaltungsnetzelements von einem Datenverwaltungsnetzelement; und
Bestimmen, **durch** das AMF-Netzelement basierend auf den Kennungsinformationen des Sitzungsverwaltungsnetzelements, dass das AMF-Netzelement und das Sitzungsverwaltungsnetzelement zu einem gleichen öffentlichen Mobilkommunikationsnetz (public land mobile network- PLMN) gehören, und Aufbauen, **durch** das AMF-Netzelement, der PDU-Sitzung in dem ersten Netz;
oder
Bestimmen, **durch** das AMF-Netzelement basierend auf den Kennungsinformationen des Sitzungsverwaltungsnetzelements, dass das AMF-Netzelement und das Sitzungsverwaltungsnetzelement nicht zu einem gleichen PLMN gehören, und Ablehnen, **durch** das AMF-Netzelement, eines Aufbaus der PDU-Sitzung in dem ersten Netz.

2. Verfahren nach einem der Ansprüche 1, wobei die Kennungsinformationen des Sitzungsverwaltungsnetzelements Kennungsinformationen des PLMN umfassen, in dem sich das Sitzungsverwaltungsnetzelement befindet.

3. Verfahren nach Anspruch 1 oder 2, wobei das erste Netz ein Zugriffsnetz eines 3rd Generation Partnership Project (3GPP) ist und das zweite Netz ein Nicht-3GPP-Zugriffsnetz ist.

4. Verfahren nach einem der Ansprüche 1 bis 3, wobei die PDU-Sitzung in einem heimgerouteten Zustand ist.

5. Verfahren nach einem der Ansprüche 1 bis 4, wobei die Kennungsinformationen des Sitzungsverwaltungsnetzelements Kennungsinformationen eines Sitzungsverwaltungsnetzelements sind, das der PDU-Sitzung vor der Übergabe entspricht.

6. Verfahren nach einem der Ansprüche 1 bis 5, wobei die Nachricht eine PDU-Sitzungsaufbauanforderungsnachricht ist.

7. Computerlesbares Speichermedium, wobei das computerlesbare Speichermedium eine Anweisung speichert, und wenn die Anweisung auf einem Zugriffs- und Mobilitätsfunktions(AMF)-Netzelement abläuft, das AMF-Netzelement aktiviert ist, um das Verfahren nach einem der Ansprüche 1 bis 6 durchzuführen.

8. Zugriffs- und Mobilitätsverwaltungsfunktions(AMF)-Netzelement (700), das Folgendes umfasst:
wenigstens einen Prozessor (71, 78), der mit einem Speicher (73) gekoppelt ist, wobei der wenigstens eine Prozessor (71, 78) konfiguriert ist, um in dem Speicher (73) gespeicherte Anweisungen auszuführen, um das AMF-Netzelement (700) zu aktivieren, um das Verfahren nach einem der Ansprüche 1 bis 6 durchzuführen.

9. System, das Folgendes umfasst:
ein Zugriffs- und Mobilitätsverwaltungsfunktions(AMF)-Netzelement, das konfiguriert ist, um das Verfahren nach einem der Ansprüche 1 bis 6 vorzunehmen;
und
ein Datenverwaltungsnetzelement, das konfiguriert ist, um Kennungsinformationen eines Sitzungsverwaltungsnetzelements dem Zugriffs- und Mobilitätsverwaltungsfunktions(AMF)-Netzelement bereitzustellen.

## Revendications

1. Procédé de traitement de session d'unité de données par paquets, PDU, comprenant :
la réception (401), par une élément de réseau de fonction de gestion d'accès et de mobilité, AMF, d'un message provenant d'un terminal par l'intermédiaire d'un premier réseau, le message comprenant des informations d'indication de transfert, et les informations d'indication de transfert donnant instruction à l'élément de réseau AMF de transférer une session PDU d'un second réseau vers le premier réseau ;
**caractérisé par**
le traitement, par l'élément de réseau AMF, du transfert de la session PDU sur la base d'informations d'identifiant d'un élément de réseau de gestion de session correspondant à la session PDU comprenant :
l'obtention, par l'élément de réseau AMF, des informations d'identifiant de l'élément de réseau de gestion de session en provenance d'un élément de réseau de gestion de données ; et
la détermination, par l'élément de réseau AMF sur la base des informations d'identifiant de l'élément de réseau de gestion de session, du fait que l'élément de réseau AMF et l'élément de réseau de gestion de session appartiennent à un même réseau mobile terrestre public, PLMN, et l'établissement, par l'élément de réseau AMF, de la session PDU dans le premier réseau ;
ou
la détermination, par l'élément de réseau AMF sur la base des informations d'identifiant de l'élément de réseau de gestion de session, du fait que l'élément de réseau AMF et l'élément de réseau de gestion de session n'appartiennent pas à un même PLMN et le rejet, par l'élément de réseau AMF, de l'établissement de la session PDU dans le premier réseau.

2. Procédé selon l'une quelconque de la revendication 1, dans lequel les informations d'identifiant de l'élément de réseau de gestion de session comprennent des informations d'identifiant du PLMN dans lequel se trouve l'élément de réseau de gestion de session.

3. Procédé selon la revendication 1 ou 2, dans lequel le premier réseau est un réseau d'accès de projet de partenariat de 3^{ème} génération, 3GPP, et le second réseau est un réseau d'accès non 3GPP.

4. Procédé selon l'une quelconque des revendications 1 à 3, dans lequel la session PDU est dans un état d'acheminement domiciliaire.

5. Procédé selon l'une quelconque des revendications 1 à 4, dans lequel les informations d'identifiant de l'élément de réseau de gestion de session sont des informations d'identifiant d'un élément de réseau de gestion de session correspondant à la session PDU avant le transfert.

6. Procédé selon l'une quelconque des revendications 1 à 5, dans lequel le message est un message de demande d'établissement de session PDU.

7. Support de stockage lisible par ordinateur, le support de stockage lisible par ordinateur stockant une instruction, et lorsque l'instruction s'exécute sur un élément de réseau de fonction d'accès et de mobilité, AMF, l'élément de réseau AMF étant activé de sorte qu'il effectue le procédé selon l'une quelconque des revendications 1 à 6.

8. Élément de réseau de fonction d'accès et de mobilité, AMF, (700), comprenant :
au moins un processeur (71, 78) couplé à une mémoire (73), l'au moins un processeur (71, 78) étant configuré pour exécuter des instructions stockées dans la mémoire (73), afin d'activer l'élément de réseau AMF (700) de sorte qu'il effectue le procédé selon l'une quelconque des revendications 1 à 6.

9. Système, comprenant :
un élément de réseau de fonction d'accès et de gestion de mobilité, AMF, configuré pour mettre en œuvre le procédé selon l'une quelconque des revendications 1 à 6 ; et
un élément de réseau de gestion de données, configuré pour fournir des informations d'identifiant d'un élément de réseau de gestion de session à l'élément de réseau de la fonction d'accès et de gestion de la mobilité, AMF.
